# EUROPÄISCHE PATENTSCHRIFT

(11) **EP 2 545 287 B1**
(45) Veröffentlichungstag und Bekanntmachung des Hinweises auf die Patenterteilung: **11.05.2016**
(21) Anmeldenummer: 11722286.9
(22) Anmeldetag: 04.03.2011
(51) Int. Cl.: F16B 9/02, F16B 37/08

(54) **BEFESTIGUNGSVORRICHTUNG**
FASTENING DEVICE
DISPOSITIF DE FIXATION

(30) Priorität: 28.09.2010 DE 202010013712 U; 09.03.2010 DE 102010010644
(43) Veröffentlichungstag der Anmeldung: 16.01.2013
(73) Patentinhaber: Brenk, Klaus, 79183 Waldkirch (DE)
(72) Erfinder: Brenk, Klaus, 79183 Waldkirch (DE)
(74) Vertreter: Goy, Wolfgang
(86) Internationale Anmeldenummer: PCT/DE2011/000233
(87) Internationale Veröffentlichungsnummer: WO 2011/113415

(56) Entgegenhaltungen:
- WO-A1-2009/005512
- DE-U1-202009 009 291
- FR-A1- 2 907 521
- US-A- 4 095 914

## Beschreibung

Die Erfindung betrifft eine Vorrichtung zum Befestigen einer Platte an einem Geländer, insbesondere nach den Oberbegriffen der Ansprüche 1 und 2. Derartige Vorrichtungen sind aus der US 4 095 914 A bzw. der DE 20 2009 009291 U1 bekannt.

Geländer, wie sie für Balkone oder dgl. verwendet werden, weisen oftmals Streben aus Metall auf. Diese erstrecken sich zwischen dem Boden und der oberen Brüstung. Diese Streben können entweder vertikal, horizontal oder aber auch schräg verlaufen.

Oftmals besteht das Bedürfnis, die offene Struktur eines derartigen Geländers durch Platten zu schließen. Dies ist bislang mit großen Schwierigkeiten verbunden. Der Erfindung liegt daher die **Aufgabe** zugrunde, eine technisch einfache Vorrichtung zum insbesondere nachträglichen Befestigen einer Platte an einem Geländer zu schaffen.

Die technische **Lösung** ist gekennzeichnet durch die Merkmale im Kennzeichen des Anspruchs 1 bzw. 2.

Dadurch ist eine Befestigungsvorrichtung geschaffen, mittels welcher von vornherein, aber auch vorzugsweise nachträglich eine Platte an einem Geländer befestigt werden kann. Die Grundidee der Befestigungsvorrichtung besteht darin, daß ein Spannkopf mit einem Gewinde vorgesehen ist. Dieser Spannkopf umschließt formschlüssig die Strebe des Geländers und wird vorzugsweise zu diesem Zweck auf die Strebe aufgeschoben. Zu diesem Zweck weist der Spannkopf eine Ausbuchtung auf, in welcher die Strebe zu liegen kommt. An den Spannkopf wird dann die zu befestigende Platte angelegt. Zu diesem Zweck weist diese eine Durchgangsbohrung auf. Von der anderen Seite her wird ein korrespondierender Klemmkopf derart auf den Spannkopf auf- oder eingeschraubt, daß dazwischen sandwichartig die zu befestigende Platte zu liegen kommt. Dadurch ist eine technisch einfache Möglichkeit geschaffen, um insbesondere nachträglich an einem Geländer Platten befestigen zu können. Die vorgenannten Streben des Geländers können beliebig ausgerichtet sein. Es ist lediglich erforderlich, daß der Spannkopf so ausgebildet ist, daß er die Strebe umschließt.

Eine erste Alternative des Spannkopfes schlägt gemäß Anspruch 1 vor, daß dieser einstükkig ausgebildet ist. Der Spannkopf weist dabei eine Aufnahmenut zur Aufnahme der Strebe auf. Die Breite dieser Aufnahmenut entspricht dabei im Wesentlichen dem Durchmesse der Strebe, so daß diese ohne großes seitliches Spiel oder sogar satt in dieser Aufnahmenut angeordnet ist. In dieser Aufnahmenut kann auch das Gewinde ausgebildet sein.

Eine zweite Alternative des Spannkopfes schlägt gemäß Anspruch 2 vor, daß für den Spannkopf zwei zusammenfügbare Spannbacken vorgesehen sind. Diese Spannbacken umschließen nach ihrem Zusammenfügen formschlüssig die Strebe des Geländers, so daß die Spannbacken an dieser Strebe gehalten sind. Dieses Spannbacken-Paar definiert darüber hinaus ein Gewinde. An die Spannbacken wird dann die zu befestigende Platte angelegt. Zu diesem Zweck weist diese eine Durchgangsbohrung auf. Von der anderen Seite her wird ein korrespondierender Klemmkopf derart auf das Spannbacken-Paar des Spannkopfes auf- oder eingeschraubt, daß sandwichartig die zu befestigende Platte zu liegen kommt.

Gemäß der Alternative in Anspruch 2 ist eine Einrichtung zum Zusammenhalten der beiden zusammengesetzten Spannbacken vorgesehen. Dabei kann es sich um einen aufsteckbaren Klemmring handeln. Dieser dient als eine Art Manschette und hat weiterhin die Funktion einer Anlagefläche für die Platte.

Die Alternative gemäß Anspruch 1 schlägt vor, daß nach dem Aufschieben des Spannkopfes auf die Strebe des Geländers von der anderen Seite her ein Klemmring aufgesteckt wird, bevor dann der Klemmkopf ein- oder aufgeschraubt wird. Dieser Klemmring schafft ein Gegenlager in Form einer Anlagefläche für die Platte.

Eine bevorzugte technische Realisierung schlägt die Weiterbildung gemäß Anspruch 3 vor, nämlich dass der Klemmring eine halbkreisförmige Ausnehmung hat, die dazu ausgebildet ist, an der Strebe zur Anlage zu kommen.

Eine weitere bevorzugte Weiterbildung schlägt Anspruch 4 vor. Die Grundidee besteht hier darin, daß in dem Spannkopf ein Innengewinde definiert ist, während der Klemmkopf einen Bolzen mit einem korrespondierenden Außengewinde aufweist. Damit bei der Ausführungsform mit dem Spannbacken-Paar die beiden Spannbacken nicht auseinanderfallen, ist eine Einrichtung vorgesehen, welche sie zusammenhält.

Schließlich schlägt die Weiterbildung gemäß Anspruch 5 vor, daß der Klemmkopf eine Bohrung aufweist. Diese dient dazu, daß in diese Bohrung ein Bolzen hineingesteckt werden kann. Auf diese Weise läßt sich der Klemmkopf auf einfache Weise anziehen.

Zwei Ausführungsbeispiele einer erfindungsgemäßen Vorrichtung zur Befestigung einer Platte an einem Geländer wird nachfolgend anhand der Zeichnungen beschrieben. In diesen zeigt:
- Fig. 1: eine Explosionsdarstellung eines ersten Ausführungsbeispiels einer Befestigungsvorrichtung zum Befestigen einer Platte;
- Fig. 2: die Befestigungsvorrichtung in Fig. 1 mit der Platte in der Befestigungsposition;
- Fig. 3: eine Explosionsdarstellung eines zweiten Ausführungsbeispiels einer Befestigungsvorrichtung zum Befestigen einer Platte;
- Fig. 4: die Befestigungsvorrichtung in Fig. 3 mit der Platte in der Befestigungsposition.

An einer schematisch angedeuteten Strebe 1 eines Geländers soll eine Platte 2 befestigt werden. Diese Platte 2 weist zu deren Befestigung eine Durchgangsbohrung 3 auf.

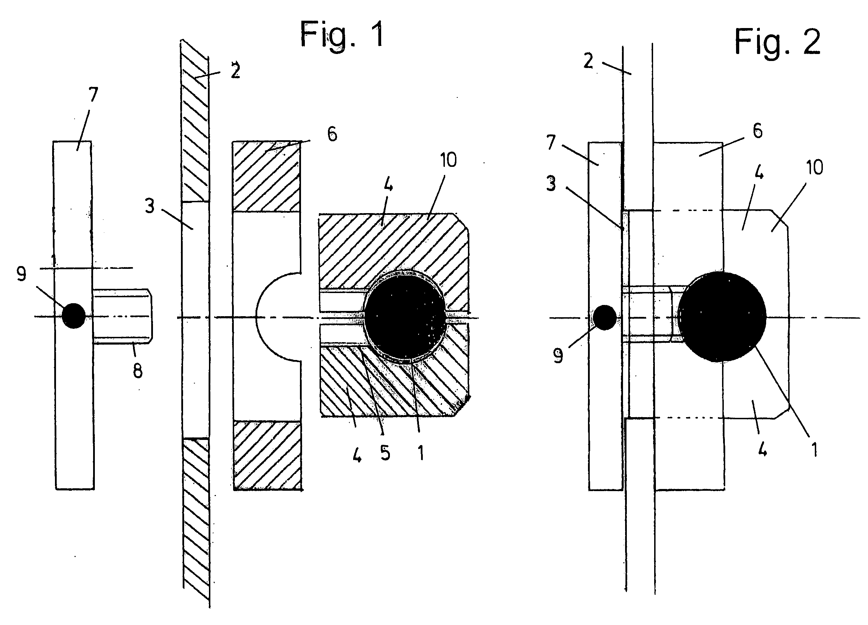

Die Befestigungsvorrichtung einer ersten Ausführungsform der Fig. 1 und 2 weist zwei Spannbacken 4 auf. Diese definieren einen Spannkopf 10. Die beiden Spannbacken 4 dieses Spannkopfes 10 weisen zum einen eine mittige Ausnehmung auf sowie weiterhin definieren sie im zusammengefügten Zustand ein Gewinde 5 in Form eines Innengewindes.

Weiterhin ist ein Klemmring 6 vorgesehen, außerdem ein Klemmkopf 7. Dieser Klemmkopf 7 weist ein Gegengewinde 8 in Form eines ein Außengewinde aufweisenden Bolzens auf. Schließlich besitzt der Klemmkopf 7 noch eine Bohrung 9.

Die Funktionsweise ist wie folgt:

Um die Platte 2 an der Strebe 1 des Geländers befestigen zu können, werden zunächst die beiden Spannbacken 4 an die Strebe 1 angefügt, indem sie die Strebe 1 umschließen. In dieser Position definieren die beiden Spannbacken 4 das Gewinde 5 in Form eines Innengewindes. Damit die beiden Spannbacken 4 nicht auseinanderfallen, wird von der Gewindeseite her der Klemmring 6 aufgeschoben. Er kommt dabei mit einer entsprechenden halbkreisförmigen Ausnehmung an der Strebe 1 zur Anlage.

Anschließend wird die Platte 1 angefügt, wobei ihre Durchgangsbohrung 3 im Bereich des Gewindes 5 zu liegen kommt.

Zur Sicherung wird schließlich der Klemmkopf 7 mit seinem Gegengewinde 8 auf das Gewinde 5 der Spannbacken 4 aufgeschraubt. Dabei kommt die Platte 2 sandwichartig zwischen den Spannbacken 4 und dem Klemmkopf 7 zu liegen. Um den Klemmkopf 7 fest anziehen zu können, wird in seine Bohrung 9 ein Bolzen eingesetzt, so daß der Klemmkopf 7 in die Klemmrichtung gedreht werden kann.

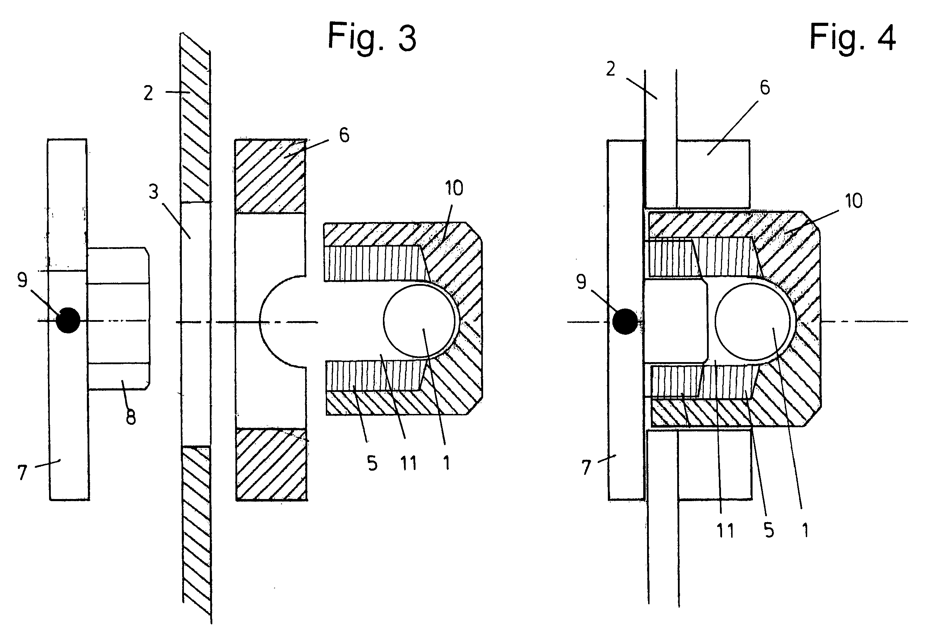

Die zweite Ausführungsform der Befestigungsvorrichtung in Fig. 3 und 4 unterscheidet sich von der ersten Ausführungsform der Fig. 1 und 2 dadurch, daß der Spannkopf 10 einstückig ausgebildet ist und nicht aus zwei Spannbacken zusammengesetzt ist.

Dieser einstückige Spannkopf 10 besitzt eine Aufnahmenut 11 zur Aufnahme der Strebe 1 des Geländers. Dabei ist die Breite dieser Aufnahmenut 11 unwesentlich größer als der Durchmesse der Strebe 1. Dies bedeutet, daß der Spannkopf 10 mit seiner Aufnahmenut 11 problemlos auf die Strebe 1 aufgeschoben werden kann. Weiterhin ist in diesem Spannkopf 10 noch ein Gewinde 5 in Form eines Innengewindes ausgebildet.

Die Funktionsweise dieser zweiten Ausführungsform unterscheidet sich vom Grundprinzip her nicht von der Funktionsweise der ersten Ausführungsform:

Dies bedeutet, daß der Spannkopf 10 mit seiner Aufnahmenut 11 entweder satt (so daß er nach dem Aufschieben durch Reibschluß auf der Strebe 1 gehalten ist) oder mit nur geringem Spiel auf die Strebe 1 aufgeschoben wird. Weiterhin wird auch hier von der anderen Seite ein Klemmring 6 aufgeschoben. Dieser kommt dabei mit einer entsprechenden halbkreisförmigen Ausnehmung an der Strebe 1 zur Anlage.

Anschließend wird die Platte 1 angefügt, wobei ihre Durchbrechung 3 im Bereich des Gewindes 5 zu liegen kommt.

Zur Sicherung wird schließlich auch hier der Klemmkopf 7 mit seinem Gegengewinde 8 auf das Gewinde 5 des Spannkopfes 10 aufgeschraubt. Dabei kommt die Platte 2 sandwichartig zwischen dem Spannkopf 10 und dem Klemmkopf 7 zu liegen. Um den Klemmkopf 7 fest anziehen zu können, wird in seine Bohrung 9 ein Bolzen eingesetzt, so daß der Klemmkopf 7 in seine Klemmrichtung gedreht werden kann.

Die zuvor beschriebenen Vorrichtungen zur Befestigung einer Platte 2 an einem Geländer können aus Kunststoff und/oder aus Metall bestehen.

### Bezugszeichenliste

- 1: Strebe
- 2: Platte
- 3: Durchgangsbohrung
- 4: Spannbacke
- 5: Gewinde
- 6: Klemmring
- 7: Klemmkopf
- 8: Gegengewinde
- 9: Bohrung
- 10: Spannkopf
- 11: Aufnahmenut

## Patentansprüche

1. Vorrichtung zum Befestigen einer Platte (2) an einem Geländer,
mit einem einstückig ausgebildeten Spannkopf (10) mit einem Gewinde (5) sowie mit einem Klemmkopf (7) mit einem dazu korrespondierenden Gegengewinde (8), wobei eine Strebe (1) des Geländers vom Spannkopf (10) formschlüssig umschließbar und
wobei die zu befestigende Platte (2) zwischen dem Spannkopf (10) einerseits und dem mit seinem Gegengewinde (8) in oder auf das Gewinde (5) des Spannkopfes (10) eingedrehten Klemmkopf (7) andererseits sandwichartig festlegbar ist,
**dadurch gekennzeichnet, dass**
der Spannkopf (10) eine Aufnahmenut (11) zur Aufnahme der Strebe (1) aufweist, wobei die Breite dieser Aufnahmenut im Wesentlichen dem Durchmesser der Strebe (1) entspricht und
- dass von der Gewindeseite her auf den Spannkopf (10) ein Klemmring (6) aufsteckbar ist, der eine Anlagefläche für die zu befestigende Platte bildet.

2. Vorrichtung zum Befestigen einer Platte (2) an einem Geländer,
mit einem Spannkopf (10) mit einem Gewinde (5) sowie
mit einem Klemmkopf (7) mit einem dazu korrespondierenden Gegengewinde (8), wobei eine Strebe (1) des Geländers vom Spannkopf (10) formschlüssig umschließbar ist
wobei die zu befestigende Platte (2) zwischen dem Spannkopf (10) und dem mit seinem Gegengewinde (8) in oder auf das Gewinde (5) des Spannkopfes (10) gedrehten Klemmkopf (7) sandwichartig festlegbar ist,
**dadurch gekennzeichnet, dass**
- der Spannkopf (10) durch zwei zusammenfügbare Spannbacken (4) definiert ist, die nach ihrem Zusammenfügen das Gewinde (5) definieren, und die Strebe (1) des Geländers formschlüssig umschließen,
- wobei auf/in das Spannbacken-Paar (4) des Spannkopfes (10) der Klemmkopf (7) auf- oder eingeschraubt wird, so dass die zu befestigende Platte (2) sandwichartig zwischen dem durch die Spannbacken (4) gebildeten Spannkopf (10) und dem Klemmkopf (7) zu liegen kommt, wobei
- ein Klemmring (6) als Einrichtung zum Zusammenhalten der beiden zusammengesetzten Spannbacken (4) vorgesehen ist, damit diese nicht auseinanderfallen, wobei der Klemmring (6) von der Gewindeseite her auf den Spannkopf (10) aufsteckbar ist und eine Anlagefläche für die zu befestigende Platte bildet.

3. Vorrichtung nach Anspruch 1 oder 2,
**dadurch gekennzeichnet, dass**
der Klemmring (6) eine halbkreisförmige Ausnehmung hat, die dazu ausgebildet ist, an der Strebe zur Anlage zu kommen.

4. Vorrichtung nach einem der vorhergehenden Ansprüche,
**dadurch gekennzeichnet,**
**dass** das Gewinde (5) ein Innengewinde ist und
**dass** das Gegengewinde (8) ein Bolzen mit einem Außengewinde ist.

5. Vorrichtung nach einem der vorhergehenden Ansprüche,
**dadurch gekennzeichnet,**
**dass** der Klemmkopf (7) eine Bohrung (9) zum Anziehen mittels eines eingesteckten Bolzens aufweist.

## Claims

1. A device for fastening a plate (2) to a rail,
comprising a gripping head (10), which is embodied in one piece, comprising a thread (5) as well as comprising a clamping head (7) comprising a corresponding mating thread (8), wherein the gripping head (10) can enclose a strut (1) of the rail in a positive manner
and
wherein the plate (2), which is to be fastened, can be fixed in a sandwich-like manner between the gripping head (10) on the one side and the clamping head (7) on the other side, which is screwed into or onto the thread (5) of the gripping head (10) with its mating thread (8),
**characterized in that**
- the gripping head (10) has a receiving groove (11) for receiving the strut (1), wherein the width of this receiving groove substantially corresponds to the diameter of the strut (1) and
- from the thread side, a clamping ring (6), which forms a bearing surface for the plate, which is to be fastened, can be inserted onto the gripping head (10).

2. The device for fastening a plate (2) to a rail,
comprising a gripping head (10) comprising a thread (5) as well as comprising clamping head (7) comprising a corresponding mating thread (8), wherein the gripping head (10) can enclose a strut (1) of the rail in a positive manner
wherein the plate (2), which is to be fastened, can be fixed in a sandwich-like manner between the gripping head (10) and the clamping head (7), which is screwed into or onto the thread (5) of the gripping head (10) with its mating thread (8),
**characterized in that**
- the gripping head (10) is defined by two clamping jaws (4), which can be joined and which, after being joined, define the thread (5) and enclose the strut (1) of the rail in a positive manner,
- wherein the clamping head (7) is screwed onto/into the clamping jaw pair (4) of the gripping head (10), so that the plate (2), which is to be fastened, comes to rest between the gripping head (10), which is formed by the clamping jaws (4), and the clamping head (7) in a sandwich-like manner, wherein
- provision is made for a clamping ring (6) as device for holding together the two clamping jaws (4), which are put together, so that they do not come apart, wherein the clamping ring (6) can be inserted onto the gripping head (10) from the thread side and forms a bearing surface for the plate, which is to be fastened.

3. The device according to claim 1 or 2,
**characterized in that**
the clamping ring (6) has a semi-circular recess, which is embodied to come to rest against the strut.

4. The device according to one of the preceding claims,
**characterized in**
**that** the thread (5) is an internal thread and
**that** the mating thread (8) is a bolt comprising an external thread.

5. The device according to one of the preceding claims,
**characterized in**
**that** the clamping head (7) has a hole (9) for tightening by means of an inserted bolt.

## Revendications

1. Dispositif pour fixer une plaque (2) sur un garde-fou, comprenant une tête de serrage (10) formée d'un seul tenant avec un filet (5) ainsi qu'une tête de blocage (7) avec un contre-filet (8) correspondant, sachant qu'une barre (1) du garde-fou peut être entourée par complémentarité de forme par la tête de serrage (10), et sachant que la plaque à fixer (2) peut être fixée en sandwich entre la tête de serrage (10) d'une part et la tête de blocage (7) vissée avec son contre-filet (8) dans ou sur le filet (5) de la tête de serrage (10) d'autre part,
**caractérisé en ce que**
la tête de serrage (10) présente une rainure de réception (11) pour recevoir la barre (1), sachant que la largeur de cette rainure de réception correspond essentiellement au diamètre de la barre (1) et
que depuis le côté du filet, une bague de serrage (6) peut être placée sur la tête de serrage (10), laquelle forme une surface d'appui pour la plaque à fixer.

2. Dispositif pour fixer une plaque (2) sur un garde-fou, comprenant une tête de serrage (10) avec un filet (5) ainsi qu'une tête de serrage (7) avec un contre-filet (8) correspondant, sachant qu'une barre (1) du garde-fou peut être entourée par complémentarité de forme par la tête de serrage (10), et
- sachant que la plaque à fixer (2) peut être fixée en sandwich entre la tête de serrage (10) d'une part et la tête de blocage (7) vissée avec son contre-filet (8) dans ou sur le filet (5) de la tête de serrage (10) d'autre part,
**caractérisé en ce que**
- la tête de serrage (10) est définie par deux mâchoires de serrage (4) pouvant être assemblées, qui définissent le filet (5) après leur assemblage, et entourent la barre (1) du garde-fou par complémentarité de forme,
- sachant que la tête de blocage (7) est vissée sur/dans la paire de mâchoires de serrage (4) de la tête de serrage (10), de telle sorte que la plaque (2) à fixer vient se placer en sandwich entre la tête de serrage (10) formée par les mâchoires de serrage (4) et la tête de blocage (7),
- sachant qu'une bague de serrage (6) est prévue en tant que dispositif pour maintenir ensemble les deux mâchoires de serrage (4) assemblées, afin que celles-ci ne se séparent pas, sachant depuis le côté du filet, la bague de serrage (6) peut être placée sur la tête de serrage (10) et forme une surface d'appui pour la plaque à fixer.

3. Dispositif selon la revendication 1 ou 2,
**caractérisé en ce que**
la bague de serrage (6) présente un évidement semi-circulaire qui est formé pour venir s'appuyer sur la barre.

4. Dispositif selon l'une des revendications précédentes,
**caractérisé en ce**
**que** le filet (5) est un filet femelle et
**que** le contre-filet (8) est un boulon avec un filet mâle.

5. Dispositif selon l'une des revendications précédentes,
**caractérisé en ce**
**que** la tête de blocage (7) présente un perçage (9) pour le serrage au moyen d'un boulon inséré.
